# FASCICULE DE BREVET EUROPEEN

(11) **EP 0 391 455 B1**
(45) Date de publication et mention de la délivrance du brevet: **26.05.1993**
(21) Numéro de dépôt: 90200487.8
(22) Date de dépôt: 01.03.1990
(51) Int. Cl.: C08F 283/02, C08G 63/82

(54) **Procédé pour la fabrication de polymères du chlorure de vinyle modifiés par des polymères de lactones et nouveaux polymères du chlorure de vinyle modifiés par des polymères de lactones**
Verfahren zur Herstellung von Vinylchloridpolymeren, modifiziert mit Lactonpolymeren und mit Lactonpolymeren modifizierte Vinylchloridpolymere
Process for the preparation of lactone-polymer modified vinyl chloride polymers and novel vinyl chloride polymers modified with lactone polymers

(30) Priorité: 13.03.1989 FR 8903371; 06.12.1989 BE 8901305
(43) Date de publication de la demande: 10.10.1990
(73) Titulaire: SOLVAY (Société Anonyme), B-1050 Bruxelles (BE)
(72) Inventeur: Malfroid, Pierre, B-5980 Grez-Doiceau (BE); Nguyen, Qui Long, B-1090 Bruxelles (BE); Dewaele, Nicole, B-1020 Bruxelles (BE); Blondin, Jean-Marie, B-1050 Bruxelles (BE); Burnay, Jean-Paul, B-1120 Bruxelles (BE)
(74) Mandataire: Marckx, Frieda

(56) Documents cités:
- EP-A- 0 264 982

## Description

La présente invention concerne un procédé perfectionné pour la fabrication de polymères du chlorure de vinyle modifiés par des polymères de lactones. Elle concerne également de nouveaux polymères du chlorure de vinyle modifiés par des polymères de lactones de faible poids moléculaire.

Dans les demandes de brevets japonais JA-A-60.090208 du 22 octobre 1983 (KANEGAFUCHI CHEM.) et JA-A-61.062547 du 4 septembre 1984 (MITSUBISHI MONSANTO CHEM.), on décrit la fabrication de polymères du chlorure de vinyle modifiés par des polymères de lactones par dissolution d'un polymère de lactone préformé dans du chlorure de vinyle, suivie de la polymérisation en suspension aqueuse avec greffage du chlorure de vinyle sur le polymère de lactone. Ce procédé de l'art antérieur présente de multiples inconvénients en ce qu'il nécessite la fabrication, la séparation de son milieu de polymérisation et le séchage du polymère de lactone avant mise en oeuvre à la polymérisation du chlorure de vinyle, ainsi que la séparation et le séchage du polymère du chlorure de vinyle modifié résultant. En outre, la prédissolution du polymère de lactone dans le chlorure de vinyle constitue habituellement une opération de longue durée.

Dans la demande de brevet français FR-A-86.13204 du 18.9.1986 (SOLVAY & CIE), on décrit par ailleurs un procédé utilisable pour la fabrication de polymères du chlorure de vinyle modifiés par des polymères de lactones qui ne présente pas les inconvénients précités. Selon ce procédé, on polymérise, dans une première étape, par voie ionique une lactone dans du chlorure de vinyle et, dans une deuxième étape, on polymérise par voie radicalaire en dispersion aqueuse et en présence du milieu de polymérisation provenant de l'étape première ledit chlorure de vinyle, éventuellement additionné d'autres monomères insaturés polymérisables par voie radicalaire. Dans les exemples de réalisation relatifs à la fabrication de tels polymères modifiés du chlorure de vinyle, le catalyseur ionique mis en oeuvre à raison de 0,02 atome-gramme de métal par mole de lactone est constitué par un dérivé alkylé et alkoxylé de l'aluminium, complexé par le tétrahydrofuranne, et obtenu à l'intervention de trialkylaluminium, d'un diol et d'eau. Ces catalyseurs produisent des polymères de lactones ayant des poids moléculaires et des viscosités très élevés. Dans la pratique industrielle, il s'est maintenant avéré que l'élévation importante de la viscosité du milieu de polymérisation de la lactone conduit à des difficultés d'agitation qui peuvent affecter l'homogénéité des polymères modifiés du chlorure de vinyle obtenus en fin de seconde étape et, dès lors, l'aspect de surface des articles finis fabriqués à leur intervention.

L'augmentation de la concentration catalytique a permis de réduire le poids moléculaire des polylactones et de pallier aux inconvénients précités. De même, l'utilisation d'un catalyseur similaire dans lequel le butanediol a été remplacé par du butanol a conduit à des polylactones de poids moléculaires réduits et a donc également permis de résoudre le problème de la viscosité élevée du milieu de polymérisation de la lactone. Toutefois, il s'est avéré que les articles souples fabriqués à partir de polychlorures de vinyle modifiés à l'intervention de telles polylactones à poids moléculaires réduits donnent lieu à de l'exsudation.

La présente invention procure un procédé perfectionné pour la fabrication de polymères du chlorure de vinyle modifiés par des polymères de lactones qui ne présente pas les inconvénients précités tout en bénéficiant des avantages, simplicité et économie, du procédé décrit dans la demande de brevet français FR-A-86.13204 et qui conduit à des polymères modifiés présentant une homogénéité encore accrue. Elle procure également de nouveaux polymères du chlorure de vinyle modifiés par des polymères de lactones constitués par des polymères de lactones de faible poids moléculaire moyen greffés de polymères du chlorure de vinyle.

A cet effet, la présente invention procure un procédé dans lequel, dans une première étape, on polymérise par voie ionique dans le chlorure de vinyle une lactone et, dans une seconde étape, on polymérise par voie radicalaire en dispersion aqueuse et en présence du milieu de polymérisation de l'étape première ledit chlorure de vinyle, éventuellement additionné d'autres monomères insaturés polymérisables par voie radicalaire, caractérisé en ce que le catalyseur ionique de l'étape première est constitué par le produit de la réaction, facultativement complexé par le tétrahydrofuranne, d'un alkylmétal avec un alcool éthyléniquement insaturé, éventuellement en présence d'eau. Les catalyseurs ioniques utilisés à la première étape du procédé selon l'invention se distinguent donc essentiellement des catalyseurs décrits précédemment par le fait qu'ils résultent de la réaction d'un alkylmétal avec un alcool éthyléniquement insaturé. La présence, facultative, de tétrahydrofuranne complexant est sans incidence sur l'activité du catalyseur.

Les polymères du chlorure de vinyle modifiés par des polymères de lactones obtenus selon le procédé de l'invention présentent un taux de greffage appréciable, généralement de plusieurs dizaines de pour cents et dans la plupart des cas supérieur à 50 %, de sorte que les articles souples fabriqués à partir de ces polymères modifiés n'exsudent pas malgré le poids moléculaire moyen réduit des polymères de lactones.

Le procédé selon l'invention comprend donc une première étape au cours de laquelle on polymérise, par voie ionique, une lactone. Par polymérisation d'une lactone, on entend désigner l'homopolymérisation d'une lactone ou la copolymérisation de plusieurs lactones.

Par lactone, on entend désigner n'importe quelle lactone. On donne néanmoins la préférence aux lactones dont le cycle hétéro-atomique comprend de 4 à 16 atomes. A titre d'exemples de pareilles lactones, on peut mentionner la β-propiolactone, la β-butyrolactone, la δ-valérolactone, l'ε-caprolactone, la capryllactone et la laurolactone, le lactide, le glycolide ainsi que leurs dérivés de substitution alkylés et/ou halogénés, tels que la β,β-bis(chlorométhyl) β-propiolactone, la pivalolactone, les méthylcaprolactones et les chlorocaprolactones. Les lactones particulièrement préférées sont les lactones non substituées dont le cycle hétéroatomique comprend 4, 6, 7 ou 8 atomes, c'est-à-dire la β-propiolactone, la δ-valérolactone, l'ε-caprolactone et la ξ-oenantholactone. Une lactone tout particulièrement préférée est l'ε-caprolactone.

On peut donc mettre en oeuvre à la polymérisation par voie ionique une ou plusieurs lactones, telles que définies ci-dessus, et ce, soit simultanément avec formation de copolymères statistiques, soit successivement avec formation de copolymères à blocs. Les propriétés des polymères de lactones (polymères modifiants) peuvent donc être modifiées en fonction du choix du ou des monomères et de leur mode de mise en oeuvre. On donne néanmoins la préférence à l'homopolymérisation, et plus particulièrement encore à l'homopolymérisation de l'ε-caprolactone.

Les comonomères insaturés polymérisables avec le chlorure de vinyle à la deuxième étape peuvent être choisis parmi tous les comonomères usuels du chlorure de vinyle. A titre d'exemples de pareils comonomères, on peut citer les oléfines, les oléfines halogénées, les éthers vinyliques, les esters vinyliques, ainsi que les esters, les nitriles et les amides acryliques.

Par polymère du chlorure de vinyle, on entend donc désigner les homopolymères et les copolymères, statistiques ou à blocs, du chlorure de vinyle contenant au moins 50 % en poids et, de préférence, 65 % en poids de chlorure de vinyle.

Par polymère du chlorure de vinyle modifié, on entend donc désigner les polymères, homo- et copolymères du chlorure de vinyle, tels que définis ci-dessus, modifiés par des polymères de lactones tels que définis ci-dessus.

Le catalyseur utilisé à la première étape du procédé selon l'invention est choisi parmi les produits de la réaction, facultativement complexés par le tétrahydrofuranne, d'un alkylmétal avec un alcool éthyléniquement insaturé, éventuellement en présence d'eau. Avantageusement, on utilise des alkylmétaux dont les groupements alkyles, identiques ou différents, sont choisis parmi les groupements alkyles, à chaînes droites ou ramifiées, contenant de 1 à 18 atomes de carbone. On donne la préférence aux alkylmétaux dont les groupements alkyles sont identiques et contiennent de 2 à 12 atomes de carbone et plus particulièrement encore à ceux dont les groupements alkyles identiques contiennent de 2 à 5 atomes de carbone. Pour ce qui concerne la nature du métal de l'alkylmétal, celle-ci n'est pas critique. Avantageusement, on utilise des alkylmétaux dans lesquels le métal est choisi parmi le lithium, le magnésium, le zinc, le titane, le zirconium, l'étain et l'aluminium. On donne néanmoins la préférence aux alkylmétaux dans lesquels le métal est choisi parmi l'aluminium et/ou le zinc et, plus particulièrement encore, à l'aluminium.

Par alcool éthyléniquement insaturé, on entend désigner les alcools primaires, secondaires ou tertiaires contenant au moins une insaturation éthylénique. Les alcools éthyléniquement insaturés utilisables selon le procédé de l'invention peuvent donc comprendre une ou plusieurs insaturations éthyléniques et celles-ci peuvent se situer dans la chaîne ou en bout de chaîne. On donne néanmoins la préférence aux alcools éthyléniquement insaturés dont la (ou les) insaturation(s) se situe(nt) en bout de chaîne et, plus particulièrement encore, aux alcools monoéthyléniquement insaturés dont l'insaturation se situe en bout de chaîne. On donne, par ailleurs, la préférence aux alcools primaires. Des alcools éthyléniquement insaturés tout particulièrement préférés dans le cadre de la présente invention sont donc constitués par les alcools primaires monoéthyléniquement insaturés dont l'insaturation se situe en bout de chaîne. Le nombre total d'atomes de carbone de l'alcool éthyléniquement insaturé n'est pas critique. Généralement, il contient de 3 à 20 atomes de carbone et dans la plupart des cas de 3 à 12 atomes de carbone. Les alcools éthyléniquement insaturés sont donc choisis de préférence parmi les alcools primaires monoéthyléniquement insaturés dont l'insaturation se situe en bout de chaîne et qui contiennent de 3 à 12 atomes de carbone et plus particulièrement encore parmi ceux contenant de 3 à 6 atomes de carbone. Un alcool éthyléniquement insaturé tout particulièrement préféré est l'alcool allylique. Des catalyseurs qui sont particulièrement préférés sont dès lors constitués par les produits de la réaction, facultativement complexés par le tétrahydrofuranne, d'un alkylmétal dans lequel le métal est choisi parmi l'aluminium et/ou le zinc et dont les groupements alkyles identiques contiennent de 2 à 5 atomes de carbone avec un alcool primaire monoéthyléniquement insaturé dont l'insaturation se situe en bout de chaîne et qui contient de 3 à 6 atomes de carbone, éventuellement en présence d'eau.

Les proportions molaires des réactifs (alkylmétal, alcool et éventuellement eau) et, facultativement, du tétrahydrofuranne mis en oeuvre pour la fabrication du catalyseur utilisé à l'étape première ne sont pas critiques et peuvent varier dans une assez large mesure. On utilise généralement de 0,1 à 3 moles et, de préférence, de 0,5 à 2 moles d'alcool éthyléniquement insaturé par atome-gramme de métal actif. Dans le cas où de l'eau intervient également dans la fabrication du catalyseur, on utilise généralement de 0,01 à 0,5 mole d'eau par atome-gramme de métal actif. Dans le cas où le catalyseur est complexé par le tétrahydrofuranne, celui-ci est généralement mis en oeuvre à raison de 0,1 à 20 moles et, plus particulièrement, à raison de 1 à 5 moles par atome-gramme de métal actif.

Le mode de fabrication du catalyseur n'est pas critique. Celui-ci peut être utilisé à l'état pur ou en solution dans un diluant inerte, tel que l'hexane, l'heptane ou encore dans le chlorure de vinyle liquide. La réaction peut être effectuée entre -70 et +70°C, de préférence entre -30 et +20°C. Elle doit être effectuée à l'abri de l'air. L'ordre d'introduction des réactifs et, facultativement, de l'agent complexant n'est pas critique dans le cas où le catalyseur est fabriqué dans un diluant inerte. Un mode opératoire particulièrement simple dans ce cas consiste à introduire goutte à goutte le réactif hydroxylé (alcool et, le cas échéant, eau) et, facultativement, le tétrahydrofuranne dans une solution du ou des alkylmétaux dans un diluant inerte, refroidie aux environs de -20°C et balayée par de l'azote pur et sec. Dans le cas où le catalyseur est fabriqué dans le chlorure de vinyle, il est indispensable d'introduire le ou les alkylmétaux dans une solution de l'alcool éthyléniquement insaturé (contenant facultativement du tétrahydrofuranne) dans du chlorure de vinyle liquide sous pression d'azote.

La concentration catalytique peut varier dans une assez large mesure. Il va de soi que la concentration catalytique influe sur le poids moléculaire moyen du polymère de lactone et qu'à même concentration catalytique le rapport molaire alcool/métal mis en oeuvre à la fabrication du catalyseur influe également sur le poids moléculaire moyen du polymère de lactone. Le catalyseur est généralement mis en oeuvre à raison de 0,001 à 0,1 atome-gramme de métal actif et, de préférence, à raison de 0,005 à 0,05 atome-gramme de métal actif par mole de monomère polymérisable par voie ionique (lactone(s)).

Suivant un mode de réalisation préféré de l'invention, on règle la concentration catalytique de manière à produire des polymères de lactones dont le poids moléculaire moyen en nombre (Mn) est inférieur à 10.000 et plus particulièrement encore inférieur à 5.000. Avantageusement, le poids moléculaire moyen en nombre des polymères de lactones est compris entre 2.000 et 4.000.

Les quantités respectives de lactone, d'une part, et de chlorure de vinyle, d'autre part, mis en oeuvre à l'étape première ne sont pas critiques. Elles dépendent essentiellement de la quantité de polymère modifiant que l'on souhaite incorporer au polymère du chlorure de vinyle. On tiendra compte, le cas échéant, de la quantité d'autre(s) monomère(s) insaturé(s) polymérisable(s) par voie radicalaire que l'on a décidé d'ajouter au milieu de polymérisation issu de l'étape première avant d'entamer la seconde étape, c'est-à-dire la polymérisation par voie radicalaire du chlorure de vinyle et, le cas échéant, d'autre(s) monomère(s) polymérisable(s) par cette voie.

Les conditions générales de la polymérisation ionique de la (des) lactone(s) sont celles habituellement appliquées pour ce type de polymérisation, si ce n'est que la polymérisation s'effectue au sein du chlorure de vinyle et non dans un solvant organique usuel. Pour fixer les idées, la température de la réaction de polymérisation se situe généralement en-dessous de 100°C et le plus souvent entre 15 et 60°C environ et la pression opératoire est égale à la pression de vapeur saturante du chlorure de vinyle à la température de polymérisation choisie. Le déroulement de la réaction de polymérisation (exothermique) est suivi par la mesure de la différence de température entre le liquide caloporteur et le milieu de polymérisation (Δt positif). On considère la réaction comme terminée lorsque la différence de température Δt est égale à zéro. Habituellement, on maintient encore pendant une heure le milieu à température de polymérisation.

Après la (co)polymérisation par voie ionique de la lactone, on laisse refroidir le milieu de polymérisation à température ambiante. Ensuite, on y introduit tous les ingrédients nécessaires à la polymérisation classique par voie radicalaire en dispersion aqueuse du chlorure de vinyle en commençant par l'eau. Le cas échéant, le ou les comonomères insaturés polymérisables par voie radicalaire sont introduits au départ de la deuxième étape ou en différé en cours de deuxième étape.

Par polymérisation en suspension aqueuse, on entend désigner les techniques de polymérisation en suspension et en microsuspension aqueuses.

Dans la polymérisation en suspension aqueuse, on réalise la polymérisation à l'intervention d'initiateurs liposolubles en présence d'agents dispersants conventionnels tels que les solides finement dispersés, des gélatines, des éthers cellulosiques solubles dans l'eau, des polymères synthétiques comme les polyacétates de vinyle partiellement saponifiés, la polyvinylpyrrolidone, les copolymères acétate de vinyle anhydride maléique et leurs mélanges. On peut aussi, en même temps que les agents dispersants mettre en oeuvre des agents tensio-actifs. La quantité d'agent dispersant mise en oeuvre varie en général entre 0,5 et 6 ‰ en poids par rapport à l'eau.

Dans la polymérisation en microsuspension aqueuse, encore appelée parfois en dispersion aqueuse homogénéisée, on réalise une émulsion de gouttelettes de monomères, grâce à une agitation mécanique puissante et habituellement à la présence d'agents émulsionnants tels que par exemple des agents émulsionnants anioniques, et on réalise la polymérisation à l'intervention d'initiateurs liposolubles.

N'importe quel initiateur liposoluble peut être utilisé dans la polymérisation en suspension ou en microsuspension. A titre d'exemples, on peut citer les peroxydes tels que le peroxyde de di-tertiobutyle, le peroxyde de dilauroyle et le peroxyde d'acétylcyclohexylsulfonyle, les composés azoïques tels que l'azo-bis-isobutyronitrile et l'azo-bis-2,4-diméthylvaléronitrile, les peroxydicarbonates de dialkyles tels que les peroxydicarbonates de diéthyle, de diisopropyle, de dicyclohexyle et de di-tertio-butylcyclohexyle, et les alkylbores. En général, ces initiateurs sont mis en oeuvre à raison de 0,01 à 1 % en poids par rapport aux monomères.

Il est particulièrement avantageux d'appliquer le procédé suivant l'invention à la polymérisation en suspension aqueuse.

En plus d'agents dispersants ou émulsionnants et d'initiateurs, le milieu de polymérisation peut encore comprendre divers additifs normalement mis en oeuvre dans les procédés conventionnels de polymérisation en dispersion aqueuse. A titre d'exemples de pareils additifs, on peut citer les agents régulateurs du diamètre des particules de polymère, les agents régulateurs du poids moléculaire, les stabilisants et les colorants.

Les conditions de polymérisation par voie radicalaire ne diffèrent pas de celles habituellement mises en oeuvre. La température de polymérisation est en général comprise entre 35 et 80°C et la pression absolue est en général inférieure à 15 kg/cm². La quantité d'eau mise en oeuvre est en général telle que le poids total des monomères représente 20 à 50 % du poids total de l'eau et des monomères.

Les polymères du chlorure de vinyle obtenus suivant le procédé de l'invention sont isolés de manière conventionnelle de leur milieu de polymérisation en dispersion aqueuse.

Le procédé selon l'invention permet la fabrication simple et rapide, sans séparation intermédiaire du polymère de lactone modifiant, de polymères du chlorure de vinyle homogènes modifiés à façon par le biais du choix de la nature, de la quantité et du mode de mise en oeuvre (simultané ou successif) de la/des lactone(s).

L'invention concerne également de nouveaux polymères du chlorure de vinyle modifiés par des polymères de lactones constitués par des polymères de lactones dont le poids moléculaire moyen en nombre (Mn) est inférieur à 5.000 greffés de polymères du chlorure de vinyle. Elle concerne plus particulièrement de tels polymères dont le taux de greffage est supérieur à 50 %.

De nouveaux polymères particulièrement préférés sont ceux constitués par des polymères d'ε-caprolactone dont le poids moléculaire moyen en nombre (Mn) est inférieur à 5.000, avantageusement compris entre 2.000 et 4.000, greffés de polymères du chlorure de vinyle et plus particulièrement encore de tels polymères dont le taux de greffage est supérieur à 50 %.

Les polymères selon l'invention peuvent être mis en oeuvre par toutes les techniques usuelles de mise en oeuvre de compositions à base de polymères du chlorure de vinyle telles que, par exemple, l'injection, le calandrage ou l'extrusion. Ils conviennent particulièrement pour la réalisation d'objets souples utilisables dans des domaines aussi divers que le domaine médical (poches à sang et à liquides physiologiques), le domaine de l'automobile (profilés et joints divers) ou encore l'industrie du bâtiment (feuilles d'étanchéité, gaines pour câbles électriques).

Les exemples qui suivent sont destinés à illustrer le procédé et les polymères modifiés de l'invention. Ils concernent la fabrication de polychlorure de vinyle modifié par de la poly-ε-caprolactone.

Dans l'exemple 1, selon l'invention, le catalyseur utilisé est constitué par le produit de la réaction d'une mole de triisobutylaluminium et de 1 mole d'alcool allylique, complexé par 3,7 moles de tétrahydrofuranne.

Dans l'exemple 2, selon l'invention, le catalyseur utilisé est constitué par le produit de la réaction d'une mole de triisobutylaluminium avec 0,5 mole d'alcool allylique et 0,5 mole d'eau, complexé par 3,7 moles de tétrahydrofuranne.

Dans l'exemple 3, de comparaison, le catalyseur utilisé est identique à celui de l'exemple 1, si ce n'est que l'alcool allylique a été remplacé par du n-butanol.

Dans l'exemple 4, de comparaison, le catalyseur est identique à celui de l'exemple 3. Cet exemple diffère de l'exemple 3 en ce que, à la fin de la polymérisation de l'ε-caprolactone (en tous points conforme à l'exemple 3), on ajoute 3 moles de chlorure d'acryloyle (soit 13 g) par atome-gramme d'aluminium au milieu de polymérisation et on attend 15 minutes avant de procéder au chargement des ingrédients (initiateur, eau, dispersant) nécessaires à l'étape 2.

Dans l'exemple 5, selon l'invention, le catalyseur utilisé est constitué par le produit de la réaction d'une mole de triisobutylaluminium et d'une mole d'alcool allylique, complexé par 0,1 mole de tétrahydrofuranne.

Dans l'exemple 6, selon l'invention, le catalyseur utilisé est constitué par le produit de la réaction d'une mole de diéthylzinc avec une mole d'alcool allylique, complexé par 3,7 moles de tétrahydrofuranne.

Dans l'exemple 7, selon l'invention, le catalyseur utilisé est identique à celui utilisé à l'exemple 2.

Dans l'exemple 8, selon l'invention, le catalyseur utilisé est identique à celui utilisé à l'exemple 1, si ce n'est qu'il n'est pas complexé par le tétrahydrofuranne.

Dans les exemples 1 à 6 et 8, la polymérisation du chlorure de vinyle s'effectue en suspension aqueuse et dans l'exemple 7 en microsuspension aqueuse.

La concentration catalytique s'élève à 0,02 atome-gramme de métal par mole d'ε-caprolactone dans tous les exemples.

Pour la réalisation des exemples 1 à 7, on utilise un réacteur de laboratoire en acier inoxydable de 3 litres de contenance, muni d'une double enveloppe pour la circulation d'un fluide caloporteur, d'un agitateur à pales conventionnel en acier inoxydable, d'un jeu de tubes de jaugeurs pour l'introduction des réactifs et d'un système classique de régulation de température.

### Exemples 1 à 4

Les exemples 1 à 4 ont été réalisés conformément au mode opératoire décrit ci-dessous.

### Etape 1

On effectue trois mises sous vide, suivies de rinçages à l'azote. Sous balayage à l'azote et à 25°C, on introduit le catalyseur. On isole le réacteur et on met l'agitateur en marche (250 t/min.). On introduit le chlorure de vinyle, par tube jaugeur, et on chauffe le contenu du réacteur à 40°C. La température de consigne atteinte, on introduit l'ε-caprolactone. La polymérisation de l'ε-caprolactone est terminée après 240 min. (tₒ + 240 min.) à 40°C. Le taux de conversion est estimé à 100 % (essai à blanc).

### Etape 2

On refroidit le contenu du réacteur à 30°C. On introduit alors 10 ml d'une solution à 12 % dans le dichlorométhane d'azo-bis-isobutyronitrile. On arrête l'agitation. Cinq minutes après l'arrêt d'agitation, on introduit, par tube jaugeur, 1200 g d'une solution aqueuse à 2 g/l d'alcool polyvinylique (taux d'hydrolyse : 72.5; viscosité dynamique à 20°C en solution aqueuse à 40 g/l : 30 mPa.s) et à 0.67 g/l de méthylhydroxypropylcellulose (viscosité à 20°C en solution aqueuse à 20 g/l : 100 mPa.s, degré de substitution du méthoxyl de 1.31 à 1.93 et degré de substitution de l'hydroxypropyl de 0.05 à 0.25). On remet l'agitateur en marche (500 t/min.). Le contenu du réacteur est porté et maintenu à 62°C. Lorsque la pression opératoire a chuté de la valeur reprise au tableau I en annexe, on introduit 8 ml d'ammoniaque 2N, on refroidit le contenu du réacteur, on réduit l'agitation à environ 50 t/min. et on dégaze. A pression atmosphérique, on effectue un traitement thermique (15 minutes à 75°C), on refroidit le contenu du réacteur et on élimine le chlorure de vinyle résiduaire par traitement avec de la vapeur d'eau.

### Exemple 5

### Etape 1

On effectue trois mises sous vide, suivies de rinçages à l'azote. Sous balayage à l'azote et à 25°C, on introduit le catalyseur. On isole le réacteur et on met l'agitateur en marche (250 t/min.). On introduit 700 g de chlorure de vinyle, par tube jaugeur, et on chauffe le contenu du réacteur à 50°C. La température de consigne atteinte, on introduit 300 g d'ε-caprolactone par tube jaugeur (temps = to). Après 3 heures de marche à 50°C, le taux de conversion est estimé à 100 % (essai à blanc). On injecte à ce moment 150 g d'eau.

### Etape 2

On refroidit le contenu du réacteur à 30°C. On introduit alors 0,7 g de peroxydicarbonate de dimyristyle dissous dans 10 ml de dichlorométhane. Quinze minutes après, on introduit par tube jaugeur 1350 g d'une solution aqueuse à 3,7 g/l de méthylhydroxypropylcellulose (viscosité à 20°C en solution aqueuse à 20 g/l : 100 mPa.s, degré de substitution du méthoxyl de 1,31 à 1,93, degré de substitution de l'hydroxypropyl de 0,05 à 0,25). Le contenu du réacteur est porté et maintenu à 54°C, avec une vitesse d'agitation de 500 t/min. Lorsque la pression opératoire a chuté de 3,5 bars, on réduit l'agitation à environ 50 t/min. et on dégaze. A pression atmosphérique, on effectue un traitement thermique (15 minutes à 75°C) et on élimine le chlorure de vinyle résiduaire par traitement avec de la vapeur d'eau (5 minutes à 100°C).

### Exemple 6

### Etape 1

On effectue trois mises sous vide, suivies de rinçages à l'azote. Sous balayage à l'azote et à 25°C, on introduit 275 g d'ε-caprolactone. On isole le réacteur et on met l'agitateur en marche (250 t/min.). On introduit 725 g de chlorure de vinyle, par tube jaugeur, suivi du catalyseur. On chauffe le contenu du réacteur à 50°C. Après 4 heures de marche à 50°C, la conversion est estimée à 100 % (essai à blanc).

### Etape 2

On refroidit le contenu du réacteur à 40°C. On introduit alors 0,725 g d'azo-bis-isobutyronitrile dissous dans 10 ml de dichlorométhane. Quinze minutes après, on introduit par tube jaugeur 1500 g d'une solution aqueuse à 2,67 g/l de méthylhydroxypropylcellulose (viscosité à 20°C en solution aqueuse à 20 g/l : 100 mPa.s, degré de substitution du méthoxyl de 1,31 à 1,93, degré de substitution de l'hydroxypropyl de 0,05 à 0,25). Le contenu du réacteur est porté et maintenu à 62°C, avec une vitesse d'agitation de 500 t/min. Lorsque la pression opératoire a chuté de 5 bars, on introduit 21 ml d'ammoniaque 2N; on réduit l'agitation à environ 50 t/min. et on dégaze. A pression atmosphérique, on effectue un traitement thermique (15 minutes à 75°C) et on élimine le chlorure de vinyle résiduaire par traitement avec de la vapeur d'eau (5 minutes à 100°C).

### Exemple 7

Pour la réalisation de cet exemple, on utilise deux réacteurs de laboratoire en acier inoxydable de 3 litres de contenance (accessoires décrits dans l'exemple 1), et un homogénéiseur de laboratoire en acier inoxydable, équipé d'un clapet d'homogénéisation, connecté aux deux réacteurs.

### Etape 1

On effectue sur toute l'installation trois mises sous vide, suivies de rinçages à l'azote. On isole ensuite le premier réacteur de polymérisation. Le réacteur étant sous balayage à l'azote et à 25°C, on introduit le catalyseur. On isole le réacteur et on met l'agitateur en marche (250 t/min.). On introduit 1000 g de chlorure de vinyle, par tube jaugeur, et on chauffe le contenu du réacteur à 50°C. La température de consigne atteinte, on introduit 100g d'ε-caprolactone par tube jaugeur (temps = to). Après 3 heures de marche à 50°C, le taux de conversion est estimé à 100 % (essai à blanc); le contenu est refroidi à 20°C. On arrête ensuite l'agitation.

### Etape 2

Cinq minutes après l'arrêt de l'agitation, on introduit, par tube jaugeur, 1200 g d'une solution aqueuse à 8,3 g/l de laurylbenzènesulfonate de sodium et 150 g d'une solution aqueuse à 2 g/l d'ammoniac. On remet l'agitation en marche (250 t/min). Après cinq minutes, on introduit, par tube jaugeur, 2,5 g de peroxyde de dilauroyle et 0.6 g de peroxydicarbonate de dimyristyle dissous dans du dichlorométhane. Vingt minutes après l'introduction des initiateurs, on ouvre les vannes reliant l'homogénéiseur aux deux réacteurs de polymérisation, et on met l'homogénéiseur en route en réglant la pression de service à 200 bars. Lorsque tout le mélange est transféré dans le second réacteur de polymérisation, celui-ci est isolé. Le contenu est porté à 57°C, sous une agitation de 120 t/min. A t₀ + 4 heures, l'agitation est accélérée jusqu'à 150 t/min. Après une chute de pression de 1 bar, la conversion est estimée à 85 %. On chauffe le contenu du réacteur de polymérisation à 80°C ; lorsque la pression atteint 6 bars, on réduit l'agitation à environ 50 t/min. et on dégaze. La pression atmosphérique atteinte, on amène le latex à ébullition en tirant sous vide, et après 20 min. de traitement, le latex est refroidi à température ambiante.

Dans les exemples 1 à 6, on a recueilli, après essorage et séchage, du polychlorure de vinyle modifié par de la poly-ε-caprolactone (PVC modifié) sous la forme de grains plus ou moins sphériques transparents, non collants, présentant un diamètre moyen de 150-160 microns environ. Dans l'exemple 7, le diamètre moyen s'élève à 0,40 microns environ.

Dans le tableau I en annexe figurent pour les exemples 1 à 7, les quantités de caprolactone (CL), de chlorure de vinyle (VC) et de catalyseur ionique (CATA) mis en oeuvre, de même que la valeur de la chute de pression en fin de polymérisation (ΔP), le taux de conversion du chlorure de vinyle (TC), la quantité de PVC modifié recueilli, la composition pondérale du PVC modifié (proportion PVC/PCL) (PCL = poly-ε-caprolactone), le taux de greffage du PVC modifié, ainsi que le poids moléculaire moyen en nombre (Mn) évalué par chromatographie par perméation de gel.

Les sept échantillons de PVC modifiés ont été examinés dans une composition contenant, pour 100 parties en poids de résine, 3 parties d'un stabilisant thermique du type calcium/zinc, 2,5 parties de lubrifiant et 5 parties d'huile de soja époxydée.

Des prémélanges de 150 g chacun ont été malaxés durant 8 minutes à 160°C sur malaxeur à cylindres. Les crêpes obtenus ont ensuite été pressés durant 4 minutes à 165°C pour former des plaques de 4 mm d'épaisseur.

Le tableau II en annexe rassemble les résultats des évaluations effectuées sur les crêpes et les plaques des sept échantillons. Sur les plaques fabriquées selon les exemples 1 et 2 et 5 à 7, selon l'invention, l'exsudation a été appréciée après un stockage d'un mois à température ambiante. Sur les plaques fabriquées selon les exemples 3 et 4, de comparaison, l'exsudation a été appréciée après un jour de stockage à température ambiante. Aucune des plaques fabriquées selon les exemples 1 à 7 ne présentait des points non gélifiés.

La comparaison des résultats des exemples 1 et 2, selon l'invention, avec ceux de l'exemple 3, de comparaison, montre que l'utilisation de n-butanol en lieu et place de l'alcool allylique dans la préparation du catalyseur conduit à un polychlorure de vinyle modifié souple très faiblement greffé présentant des problèmes de collage sur cylindre lors du malaxage et, par ailleurs, à un phénomène d'exsudation des plaques pressées.

La comparaison des résultats des exemples 1 et 2, selon l'invention, avec ceux de l'exemple 4, de comparaison, montre que l'introduction d'une insaturation dans la poly-ε-caprolactone après polymérisation conduit à du polychlorure de vinyle modifié souple, faiblement greffé, présentant tous les inconvénients précités (collage, exsudation).

### Exemple 8

Pour la réalisation de l'exemple 8, on utilise un réacteur en acier inoxydable de 300 litres de contenance, muni d'une double enveloppe pour la circulation d'un fluide caloporteur, d'un agitateur à pales conventionnel en acier inoxydable, d'un jeu de tubes de jaugeurs pour l'introduction des réactifs et d'un système classique de régulation de température.

### Etape 1

On effectue trois mises sous vide, suivies de rinçages à l'azote. Sous balayage à l'azote et à 25°C, on introduit 142 g de catalyseur exprimé en aluminium. On isole le réacteur et on met l'agitateur en marche (100 t/min.). On introduit 70 kg de chlorure de vinyle, par tube jaugeur, et on chauffe le contenu du réacteur à 50°C. La température de consigne atteinte, on introduit 30 kg d'ε-caprolactone. La polymérisation de l'ε-caprolactone est terminée après 120 min. (t0 + 120 min.) à 50°C. Le taux de conversion est estimé à 100 % (essai à blanc). La poly-ε-caprolactone présente un poids moléculaire moyen en nombre (Mn) (évalué par chromatographie par perméation de gel) de 3487.

### Etape 2

On refroidit le contenu du réacteur à 30°C. On introduit alors 200 ml d'une solution à 44 % dans le dichlorométhane de peroxydicarbonate de dimyristyle. Cinq minutes après, on introduit par tube jaugeur 135 kg d'une solution aqueuse à 3,7 g/l de méthylhydroxypropylcellulose (viscosité à 20°C en solution aqueuse à 20 g/l : 100 mPa.s, degré de substitution du méthoxyl de 1.31 à 1.93 et degré de substitution de l'hydroxypropyl de 0.05 à 0.25). Le contenu du réacteur est porté et maintenu à 54°C. La vitesse d'agitation est portée à 240 t/min. Lorsque la pression opératoire a chuté de 4 kg, on refroidit le contenu du réacteur, on réduit l'agitation à environ 20 t/min. et on dégaze. A pression atmosphérique, on élimine le chlorure de vinyle résiduaire par traitement avec de la vapeur d'eau (10 min. à 100°C).

On recueille, après essorage et séchage, 86,50 kg de polychlorure de vinyle modifié par de la poly-ε-caprolactone (PVC modifié) sous la forme de grains plus ou moins sphériques transparents, non collants, présentant un diamètre moyen de 150-160 microns. Le polymère modifié recueilli contient 34 % en poids de poly-ε-caprolactone dont le taux de greffage s'élève à 51 %.

L'échantillon de PVC modifié a été examiné dans une composition identique à celle décrite plus haut.

Un prémélange de 150 g a été malaxé durant 8 minutes à 160°C sur malaxeur à cylindres sans poser aucun problème de collage sur les cylindres. Le crêpe obtenu a ensuite été pressé durant 4 minutes à 165°C pour former une plaque de 4 mm d'épaisseur, d'aspect transparent dont la dureté Shore A initiale, évaluée à 23°C, s'élève à 79. Après un stockage d'un mois à température ambiante la plaque ne présentait toujours pas d'exsudation.

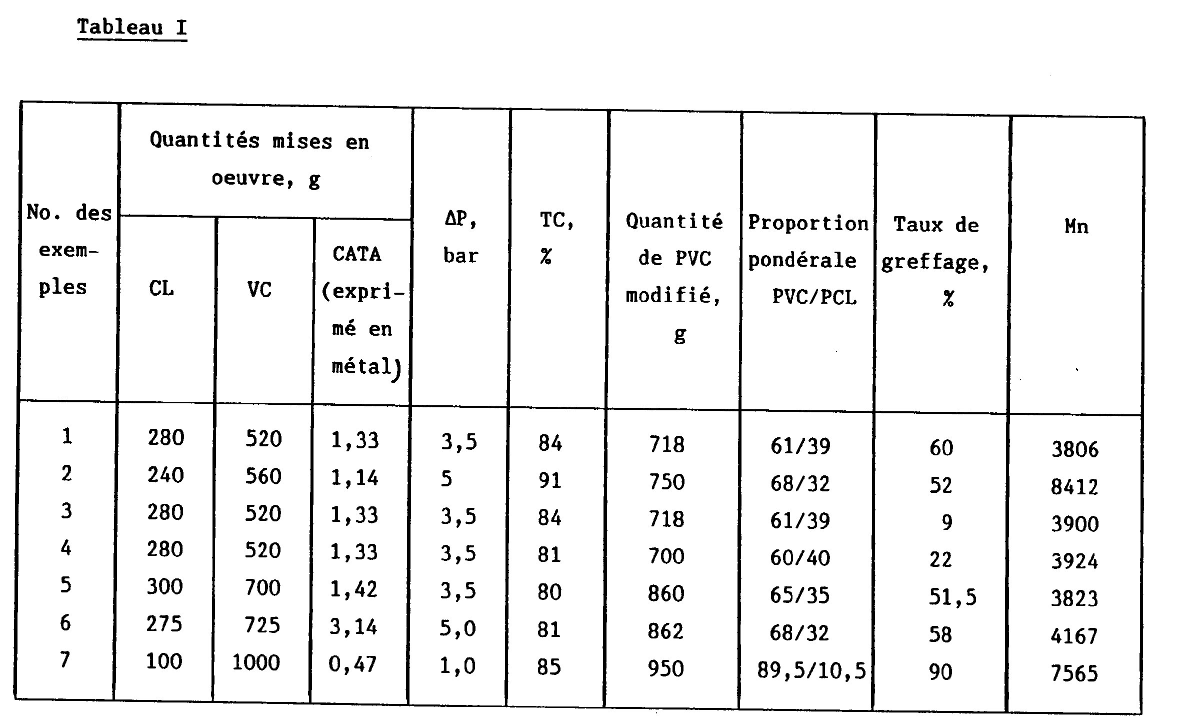

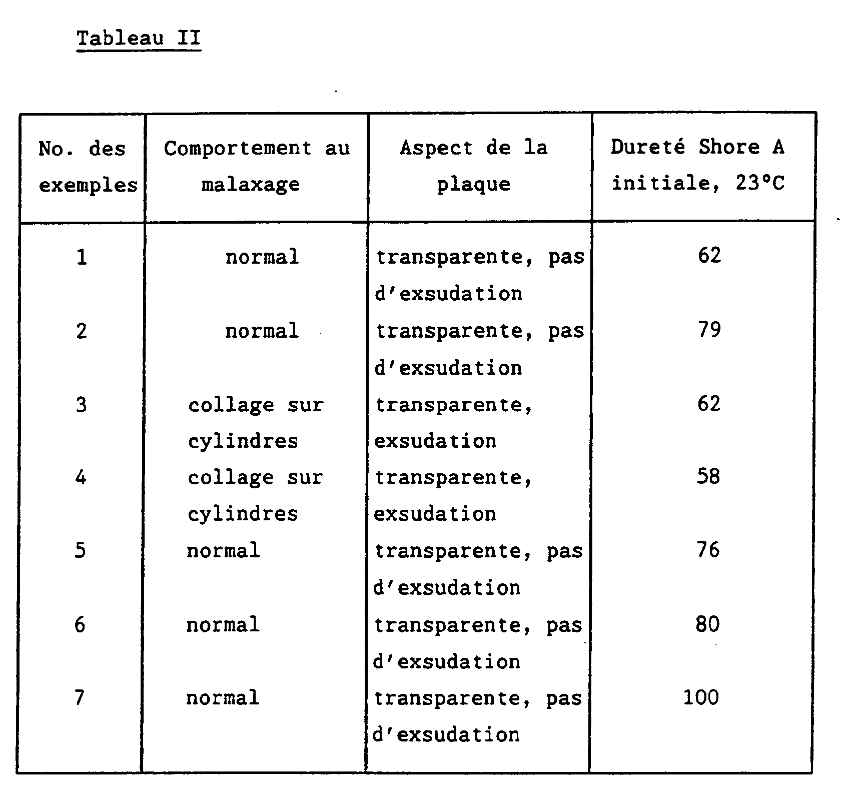

## Revendications

1. Procédé pour la fabrication xde polymères du chlorure de vinyle modifiés par des polymères de lactones dans lequel, dans une première étape, on polymérise par voie ionique dans le chlorure de vinyle une lactone et, dans une seconde étape, on polymérise par voie radicalaire en suspension aqueuse et en présence du milieu de polymérisation de l'étape première ledit chlorure de vinyle, éventuellement additionné d'autres monomères éthyléniquement insaturés polymérisables par voie radicalaire, caractérisé en ce que le catalyseur ionique de l'étape première est constitué par le produit de la réaction, facultativement complexé par le tétrahydrofuranne, d'un alkylmétal avec un alcool éthyléniquement insaturé, éventuellement en présence d'eau.

2. Procédé pour la fabrication de polymères du chlorure de vinyle modifiés suivant la revendication 1, caractérisé en ce que l'alkylmétal comprend des groupements alkyles, à chaînes droites ou ramifiées, contenant de 1 à 18 atomes de carbone et en ce que l'alcool éthyléniquement insaturé est choisi parmi les alcools éthyléniquement insaturés primaires, secondaires ou tertiaires dont la ou les insaturations éthyléniques se situent en bout de chaîne et qui contiennent de 3 à 20 atomes de carbone.

3. Procédé pour la fabrication de polymères du chlorure de vinyle modifiés suivant les revendications 1 et 2, caractérisé en ce que l'alkylmétal comprend des groupements alkyles identiques contenant de 2 à 5 atomes de carbone, en ce que le métal de l'alkylmétal est choisi parmi l'aluminium et/ou le zinc et en ce que l'alcool éthyléniquement insaturé est choisi parmi les alcools primaires monoéthyléniquement insaturés dont l'insaturation éthylénique se situe en bout de chaîne et qui contiennent de 3 à 6 atomes de carbone.

4. Procédé pour la fabrication de polymères du chlorure de vinyle modifiés suivant la revendication 1, caractérisé en ce qu'on met en réaction de 0,1 à 3 moles d'alcool éthyléniquement insaturé et, le cas échéant, de 0,01 à 0,5 mole d'eau par atome-gramme de métal actif, facultativement en présence de 0,1 à 20 moles de tétrahydrofuranne.

5. Procédé pour la fabrication de polymères du chlorure de vinyle modifiés suivant l'une quelconque des revendications 1 à 4, caractérisé en ce que le catalyseur ionique de l'étape première est complexé par le tétrahydrofuranne.

6. Procédé pour la fabrication de polymères du chlorure de vinyle modifiés suivant l'une quelconque des revendications 1 à 4, caractérisé en ce que le catalyseur ionique de l'étape première n'est pas complexé par le tétrahydrofuranne.

7. Procédé pour la fabrication de polymères du chlorure de vinyle modifiés suivant la revendication 1, caractérisé en ce que le catalyseur est mis en oeuvre à raison de 0,001 à 0,1 atome-gramme de métal actif par mole de monomère polymérisable par voie ionique.

8. Procédé pour la fabrication de polymères du chlorure de vinyle modifiés suivant la revendication 7, caractérisé en ce qu'on règle la concentration catalytique de manière à produire des polymères de lactones dont le poids moléculaire moyen en nombre est inférieur à 10.000.

9. Procédé pour la fabrication de polymères du chlorure de vinyle modifiés suivant la revendication 1, caractérisé en ce que la lactone est l'ε-caprolactone.

10. Procédé pour la fabrication de polymères du chlorure de vinyle modifiés suivant la revendication 1, caractérisé en ce que, dans la deuxième étape, la polymérisation par voie radicalaire s'effectue en suspension aqueuse.

11. Polymères du chlorure de vinyle modifiés par des polymères de lactones, caractérisés en ce qu'ils sont constitués par des polymères de lactones dont le poids moléculaire moyen en nombre est inférieur à 5.000 greffés de polymères du chlorure de vinyle.

12. Polymères du chlorure de vinyle modifiés suivant la revendication 11, caractérisés en ce qu'ils sont constitués par des polymères d'ε-caprolactone dont le poids moléculaire moyen en nombre est inférieur à 5.000 greffés de polymères du chlorure de vinyle et dont le taux de greffage est supérieur à 50 %.

## Claims

1. Process for the manufacture of vinyl chloride polymers modified with lactone polymers, in which, in a first stage, a lactone is polymerised by an ionic route in vinyl chloride and, in a second stage, the said vinyl chloride, to which other ethylenically unsaturated monomers capable of being polymerised by a radical route are optionally added, is polymerised by a radical route in aqueous suspension and in the presence of the polymerisation medium from the first stage, characterised in that the ionic catalyst of the first stage consists of the product, optionally complexed with tetrahydrofuran, of the reaction of an alkylmetal with an ethylenically unsaturated alcohol, optionally in the presence of water.

2. Process for the manufacture of modified vinyl chloride polymers according to Claim 1, characterised in that the alkylmetal contains straight- or branched-chain alkyl groups containing from 1 to 18 carbon atoms and in that the ethylenically unsaturated alcohol is chosen from primary, secondary or tertiary ethylenically unsaturated alcohols in which the ethylenic unsaturations are situated at the end of a chain and which contain from 3 to 20 carbon atoms.

3. Process for the manufacture of modified vinyl chloride polymers according to Claims 1 and 2, characterised in that the alkylmetal comprises identical alkyl groups containing from 2 to 5 carbon atoms, in that the metal of the alkylmetal is chosen from aluminium and/or zinc and in that the ethylenically unsaturated alcohol is chosen from ethylenically monounsaturated primary alcohols in which the ethylenic unsaturation is situated at the end of a chain and which contain from 3 to 6 carbon atoms.

4. Process for the manufacture of modified vinyl chloride polymers according to Claim 1, characterised in that from 0.1 to 3 moles of ethylenically unsaturated alcohol and, if appropriate, from 0.01 to 0.5 moles of water per gram-atom of active metal are reacted, optionally in the presence of 0.1 to 20 moles of tetrahydrofuran.

5. Process for the manufacture of modified vinyl chloride polymers according to any one of Claims 1 to 4, characterised in that the ionic catalyst of the first stage is complexed with tetrahydrofuran.

6. Process for the manufacture of modified vinyl chloride polymers according to any one of Claims 1 to 4, characterised in that the ionic catalyst of the first stage is not complexed with tetrahydrofuran.

7. Process for the manufacture of modified vinyl chloride polymers according to Claim 1, characterised in that the catalyst is used in a proportion of 0.001 to 0.1 gram-atoms of active metal per mole of monomer capable of being polymerised by an ionic route.

8. Process for the manufacture of modified vinyl chloride polymers according to Claim 7, characterised in that the catalyst concentration is controlled so as to produce lactone polymers whose number-average molecular weight is less than 10,000.

9. Process for the manufacture of modified vinyl chloride polymers according to Claim 1, characterised in that the lactone is ε-caprolactone.

10. Process for the manufacture of modified vinyl chloride polymers according to Claim 1, characterised in that, in the second stage, the polymerisation by a radical route takes place in aqueous suspension.

11. Vinyl chloride polymers modified with lactone polymers, characterised in that they consist of lactone polymers whose number-average molecular weight is less than 5,000, grafted with vinyl chloride polymers.

12. Modified vinyl chloride polymers according to Claim 11, characterised in that they consist of ε-caprolactone polymers whose number-average molecular weight is less than 5,000, grafted with vinyl chloride polymers and whose degree of grafting is higher than 50%.

## Patentansprüche

1. Verfahren zur Herstellung von mit Lactonpolymeren modifizierten Vinylchloridpolymeren, bei dem man in einer ersten Stufe auf ionischem Wege in dem Vinylchlorid ein Lacton polymerisiert und ,in einer zweiten Stufe, auf radikalartigem Weg in wässriger Suspension und in Anwesenheit des Polymerisationsmediums der ersten Stufe das Vinylchlorid, dem gegebenenfalls andere ethylenisch ungesättigte, auf radikalartigem Wege polymerisierbare Monomere zugefügt wurden, polymerisiert, dadurch gekennzeichnet, daß der ionische Katalysator der ersten Stufe durch das Reaktionsprodukt, fakultativ durch Tetrahydrofuran komplexiert, eines Alkylmetalls mit einem ethylenisch ungesättigten Alkohol, gegebenenfalls in Anwesenheit von Wasser, gebildet wird.

2. Verfahren zur Herstellung von modifizierten Vinylchloridpolymeren nach Anspruch 1, dadurch gekennzeichnet, daß das Alkylmetall gerad- oder verzweigtkettige Alkylgruppierungen umfaßt, die 1 bis 18 Kohlenstoffatome enthalten und, daß der ethylenisch ungesättigte Alkohol ausgewählt ist unter den primären, sekundären oder tertiären ethylenisch ungesättigten Alkoholen, deren ethylenische Ungesättigtheit(en) am Ende der Kette liegt/-en und, die 3 bis 20 Kohlenstoffatome enthalten.

3. Verfahren zur Herstellung von modifizierten Vinylchloridpolymeren nach den Ansprüchen 1 und 2, dadurch gekennzeichnet, daß das Alkylmetall identische Alkylgruppierungen mit 2 bis 5 Kohlenstoffatomen umfaßt und, daß das Metall des Alkylmetalls ausgewählt ist unter Aluminium und/oder Zink und, daß der ethylenisch ungesättigte Alkohol ausgewählt ist unter den primären, monoethylenisch ungesättigten Alkoholen, deren ethylenische Ungesättigtheit am Ende der Kette liegt und die 3 bis 6 Kohlenstoffatome enthalten.

4. Verfahren zur Herstellung von modifizierten Vinylchloridpolymeren nach Anspruch 1, dadurch gekennzeichnet, daß man 0,1 bis 3 Mol ethylenisch ungesättigten Alkohol und, gegebenenfalls, 0,01 bis 0,5 Mol Wasser pro Atomgramm aktives Metall, fakultativ in Anwesenheit von 0,1 bis 20 Mol Tetrahydrofuran, in die Reaktion einsetzt.

5. Verfahren zur Herstellung von modifizierten Vinylchloridpolymeren nach einem der Ansprüche 1 bis 4, dadurch gekennzeichnet, daß der ionische Katalysator der ersten Stufe durch das Tetrahydrofuran komplexiert ist.

6. Verfahren zur Herstellung von modifizierten Vinylchloridpolymeren nach einem der Ansprüche 1 bis 4, dadurch gekennzeichnet, daß der ionische Katalysator der ersten Stufe nicht durch das Tetrahydrofuran komplexiert ist.

7. Verfahren zur Herstellung von modifizierten Vinylchloridpolymeren nach Anspruch 1, dadurch gekennzeichnet, daß der Katalysator in einer Menge von 0,001 bis 0,1 Atomgramm des aktiven Metalls pro Mol auf ionischem Wege polymerisierbaren Monomer eingesetzt wird.

8. Verfahren zur Herstellung von modifizierten Vinylchloridpolymeren nach Anspruch 7, dadurch gekennzeichnet, daß man die katalytische Konzentration derart steuert, daß Lactonpolymere hergestellt werden, deren mittleres Molekulargewicht in Zahl kleiner als 10.000 ist.

9. Verfahren zur Herstellung von modifizierten Vinylchloridpolymeren nach Anspruch 1, dadurch gekennzeichnet, daß das Lacton das ε-Caprolacton ist.

10. Verfahren zur Herstellung von modifizierten Vinylchloridpolymeren nach Anspruch 1, dadurch gekennzeichnet, daß in der zweiten Stufe die Polymerisation auf radikalartigem Wege in wässriger Suspension durchgeführt wird.

11. Durch Lactonpolymere modifizierte Vinylchloridpolymere, dadurch gekennzeichnet, daß sie aus Lactonpolymeren, deren mittleres Molekulargewicht in Zahl kleiner als 5.000 ist, gepfropft an Vinylchloridpolymere, gebildet sind.

12. Modifizierte Vinylchloridpolymere nach Anspruch 11, dadurch gekennzeichnet, daß sie durch Polymere des ε-Caprolactons, deren mittleres Molekulargewicht in Zahl kleiner als 5.000 ist, gepfropft an Vinylchloridpolymere, gebildet sind und deren Pfropfungsrate größer als 50 % ist.
